# EUROPÄISCHE PATENTSCHRIFT

(11) **EP 2 032 399 B1**
(45) Veröffentlichungstag und Bekanntmachung des Hinweises auf die Patenterteilung: **20.10.2010**
(21) Anmeldenummer: 07725919.0
(22) Anmeldetag: 07.06.2007
(51) Int. Cl.: B60R 21/231, B60R 21/233

(54) **AIRBAG SOWIE VERFAHREN ZUM HERSTELLEN EINES AIRBAGS**
AIRBAG AND METHOD FOR THE PRODUCTION OF AIRBAGS
COUSSIN GONFLABLE AINSI QUE PROCÉDÉ DE FABRICATION D'UN COUSSIN GONFLABLE

(30) Priorität: 26.06.2006 DE 102006029592
(43) Veröffentlichungstag der Anmeldung: 11.03.2009
(73) Patentinhaber: Autoliv Development AB, 447 83 Vårgårda (SE)
(72) Erfinder: PHILLIPS, Marc, Staffordshire DE13 0AU (GB); TRUPKIEWICZ, Jakub, PL-50-257 Wroclaw (FR)
(74) Vertreter: Stornebel, Kai
(86) Internationale Anmeldenummer: PCT/EP2007/005080
(87) Internationale Veröffentlichungsnummer: WO 2008/000340

(56) Entgegenhaltungen:
- EP-A- 1 364 839
- WO-A-03/039919
- WO-A-2006/074814
- DE-A1- 19 939 618
- US-B1- 6 554 314

## Beschreibung

Die Erfindung betrifft einen Airbag, insbesondere einen Airbag für den Kopf-und Schulterbereich, mit einem Verteilelement für Gas eines Gasgenerators und mit zumindest einer aufblasbaren Kammer, die zumindest zwei Lagen aufweisend in dem Airbag ausgebildet und mit dem Gas des Gasgenerators befüllbar ist. Die Gaskammer steht in strömungstechnischer Verbindung mit Austrittsöffnungen des Verteilelementes, das zumindest eine Aufnahmeeinrichtung für den Gasgenerator aufweist und an dem Airbag angenäht ist. Diese Art Airbags werden insbesondere im Dachbereich eines Kraftfahrzeuges angeordnet und dienen zum Schutz des Kopf- und Schulterbereiches bei einem Seitenaufprall und werden auch "inflatable curtains" genannt. Bei anderen Anwendungsfällen kann diese Art von Airbags auch in der Fahrzeugtür angeordnet sein und sich nach oben entfalten.

Die Erfindung betrifft ebenfalls ein Verfahren zum Herstellen eines Airbags, insbesondere eines Airbags für den Kopf- und Schulterbereich, mit einem Verteilelement für Gas eines Gasgenerators und mit zumindest einem aufblasbaren, mehrlagigen Kammer, die mit dem Gas des Gasgenerators befüllbar ist und in strömungstechnischer Verbindung mit Ausströmöffnungen des Verteilelementes steht, das zumindest eine Aufnahmeeinrichtung für den Gasgenerator aufweist und an dem Airbag angenäht ist.

Aus der DE 199 39 618 A1 ist ein Schutzpolster für den Kopf eines Fahrzeuginsassen bekannt, das Gas in Kammern gleichzeitig oder mit erwünschter Zeitverzögerung zwischen den Kammern einführen kann. Das Polster umfasst eine innenseitige Lage und eine karosserieseitige Lage, die übereinander angeordnet und zusammengenäht sind, um so freie Kammern zwischen den Lagen zu bilden. Ein zylindrisches Element ist zwischen den oberen Abschnitten der Lagen angeordnet, Gas, das durch ein rückwärtiges Ende des zylindrischen Elementes geliefert wird, wird in die Kammern durch Ausströmöffnungen geleitet. Das zylindrische Element sowie die beiden Lagen der Kammern werden mit einer gemeinsamen Naht verschlossen.

Ein weiteres, gattungsgemäßes Airbagsystem ist aus der WO 2004/050424 A2 bekannt. Auch hier werden die Kammern durch Gewebestücke gebildet, die durch eine Umfangsnaht zu einem Hohlkörper vernäht werden. Das Verteilelement ist in dem Airbag vollständig eingenäht.

Nachteilig an den Airbags gemäß dem Stand der Technik ist der Umstand, dass die Umfangsnaht der Kammern eine hohe Elastizität und damit eine hohe Leckrate zur Folge hat. Des Weiteren erfordert die Verlagerung des mit dem Gasgenerator zu verbindenden Einfüllstutzens von einer Außen- in eine Mittellage auch eine Umstellung der oberen Verbindungsnaht sowie des oberen Abschnitts der Lager des Airbags.

Die WO 2006/074814 A1, die ein älteres, nachveröffentlichtes Dokument nach Artikel 54(3) EPÜ zeigt ein ähnliches Airbag.

Ein gattungsgemäßes Airbag ist aus EP-A-1 364 839 bekannt.

Aufgabe der vorliegenden Erfindung ist es, die Nachteile des Standes der Technik zu vermeiden und einen verbesserten Airbag und ein Verfahren zu dessen Herstellung bereitzustellen, mit dem die Anforderungen an einen Airbag während eines Unfalles besser erfüllt werden.

Der erfindungsgemäße Airbag sieht ein Verteilelement für Gas eines Gasgenerators sowie zumindest eine aufblasbare, mehrlagige Kammer vor.

Die Kammern sind mit dem Gas des Gasgenerators befüllbar und stehen in strömungstechnischer Verbindung mit Ausströmöffnungen, die in dem Verteilelement, vorzugsweise in der Nähe der Kammern, vorgesehen sind. Das Verteilelement sieht ebenfalls eine Aufnahmeeinrichtung für den Gasgenerator vor und ist an dem Airbag befestigt. Die Befestigung kann dabei kraftschlüssig, stoffflüssig oder formschlüssig erfolgen, insbesondere kann das Verteilelement angenäht, angeschweißt oder angeklebt sein. Das Verteilelement wird somit nach der "cut and sewn"-Methode hergestellt, bei der aus einem Rohling oder einem Zuschnitt, der aus einem Grundmaterial hergestellt wurde, durch Verbinden ein Hohlkörper hergestellt wird, durch den Gas aus einem Gasgenerator hindurchgeleitet wird. Das Verteilelement wird mit Lagen der Kammern über zwei die Ausströmöffnungen zumindest teilweise umgebende Verbindungsspuren zu einem Airbag verbunden, wobei die Lagen der Kammern über die Verbindungsspuren an dem Verteilelement befestigt sind. Die Kammern können nach der "one piece woven"-Methode hergestellt sein, was eine erhöhte Haltbarkeit und Dichtigkeit der Kammern zur Folge hat, da die Gewebelagen nicht mehr mittels einer Naht oder dergleichen verbunden werden, sondern die Verbindung über die Webtechnik erzeugt wird. Durch die dichteren Säume der einstückig gewobenen Kammern lassen sich längere Standzeiten des Airbags aufgrund der erhöhten Dichtigkeit realisieren. Alternativ zu der Verwendung eines Gewebematerials können auch Folien oder andere Materialien eingesetzt werden, um die Kammern oder das Verteilelement herzustellen. Die Verbindungsspuren umgeben die Ausströmöffnungen vollständig, beispielsweise wenn die Verbindungsspuren sich kreuzend verlaufend oder dicht nebeneinander geführt sind und sich nur in der Nähe der Ausströmöffnungen voneinander entfernen.

Eine Weiterbildung der Erfindung sieht vor, dass die Lagen der Kammern formschlüssig, kraftschlüssig oder stoffschlüssig an dem Verteilelement befestigt, insbesondere angenäht, angeklebt oder verschweißt sind.

Bevorzugt sind die Verbindungsspuren der Lagen der Kammern separat mit jeweils einer Lage des Verteilelementes verbunden, wobei vorgesehen sein kann, dass eine Verschlussspur die zwei Lagen des Verteilelementes miteinander verbindet und die Verbindungsspuren von der Verschlussspur beabstandet sind.

In einer Weiterbildung der Erfindung ist es vorgesehen, dass das Verteilelement zumindest eine Verschlussspur aufweist, die zwei Lagen des Verteilelementes verbindet. Ebenfalls sind zumindest zwei Verbindungsspuren vorhanden, die von der Verschlussspur beabstandet sind und die jeweiligen Lagen der Kammern separat mit jeweils einer Lage des Verteilelementes verbinden. Anders als beim Stand der Technik ist somit das Verteilelement nicht vollständig innerhalb der Kammern des Airbags aufgenommen. Vielmehr wird die Verschlussspur, die die übereinander gelegten Lagen des Verteilelementes miteinander verbindet, separat ausgeführt, so dass nur ein Teil des Verteilelementes, sinnvollerweise der Teil mit den Ausströmöffnungen, innerhalb der Kammern angeordnet ist bzw. von den Lagen des Kammermaterials abgedeckt ist. Dadurch kann der Airbag leicht an unterschiedliche Entfaltungscharakteristiken angepasst werden, die für jeden Fahrzeugtyp und gegebenenfalls in Abhängigkeit von dem Unfall bzw. Seitenaufprall verschieden sein können. Weiterhin kann die Lage des Einfüllstutzens beliebig gewählt werden, ohne die Verbindungsspur zu den Lagen der Kammern zu beeinflussen.

Um eine möglichst schnelle und angepasste Entfaltung der Kammern und Befüllung mit dem Gas des Gasgenerators zu erreichen, sind mehrere Kammern an dem Verteilelement befestigt, vorzugsweise dort, wo eine Schutzwirkung aufgebaut werden muss. Dabei kann es sinnvoll sein, dass Kammern separat voneinander an dem Verteilelement befestigt sind, so dass beispielsweise bei der B-Säule kein Kammervolumen zu befüllen ist, da dort keine Schutzfunktion benötigt wird. Um bei separaten Kammern, die nur durch das Verteilelement miteinander gekoppelt sind, eine ausreichende Stabilität des Airbags zu gewährleisten, ist zwischen den Kammern ein Verbindungsgewebe angeordnet, so dass der Airbag einen mehr oder weniger durchgehenden "Vorhang" ausbildet.

In einer Weiterbildung der Erfindung ist es vorgesehen, dass die Materialien, aus denen das Verteilelement und die Kammern hergestellt sind, physikalisch verschiedene Eigenschaften aufweisen, um den Airbag an die jeweils herrschenden Bedingungen optimal anpassen zu können. Im Bereich des Gasgenerators werden relativ hohe Temperaturen und hohe Drücke realisiert, die von dem Verteilelement aufgenommen werden müssen bzw. denen das Verteilelement standhalten muss. Dementsprechend ist das Material in diesem Bereich mit einer erhöhten Festigkeit und Temperaturbeständigkeit ausgestattet, beispielsweise durch eine besondere Webart, durch besondere Garne oder durch eine Beschichtung. In den entfernten Bereichen der Kammern wird weniger heißes Gas mit relativ geringem Druck vorhanden sein, so dass dort Gewebe oder Folien mit geringerer Festigkeit oder Faden- bzw. Materialstärke eingesetzt werden können, so dass der Airbag insgesamt leichter und in dem gefalteten Zustand kleiner ausgebildet werden kann.

Um eine verbesserte Anpassung des Airbags an die Einsatzbedingungen zu gewährleisten, ist das Verteilelement mehrteilig ausgebildet, wobei auch hier unterschiedliche Materialien in Abhängigkeit von den herrschenden Betriebsbedingungen eingesetzt werden können. Ist beispielsweise der Gasgenerator zentral an dem Verteilelement angeordnet, ist es sinnvoll, den Zentralbereich mit einem sehr festen, temperaturbeständigen Material auszustatten, während die Randbereiche des Verteilelementes, die das Gas zu den Kammern durch die Ausströmöffnungen leiten, aus einem weniger stabilen, leichteren und preiswerteren Material gefertigt werden können. Alternativ kann der Gasgenerator auch an einem Ende des Verteilelementes angeschlossen und dieses einteilig ausgebildet sein.

Eine Ausgestaltungsform der Erfindung sieht vor, dass die Verbindungsspur, mit der die Kammer an dem Verteilelement befestigt ist, sich über die gesamte Länge der Kammer erstreckt, so dass die Kammer, die aus einem einstückigen Gewebe besteht, das an einer Seite offen ist, um das Verteilelement aufzunehmen, zusammen mit dem befestigten Verteilelement einen im wesentlichen geschlossenen Hohlraum bildet, in den durch die Ausströmöffnungen des Verteilelementes Gas eingeleitet werden kann.

Das Verteilelement kann im Bereich der Aufnahmeeinrichtung ein Material höherer Temperaturbeständigkeit und/oder Reißfestigkeit als im Bereich der Ausströmöffnungen aufweisen, um besser an die thermischen und mechanischen Belastungen angepasst werden zu können.

Eine Weiterbildung der Erfindung sieht vor, dass das Verteilelement nur mit einem unteren, die Ausströmöffnung aufweisenden Abschnitt von der Kammer oder den Kammern überdeckt ist und ein oberer Bereich des Verteilelementes aus den Kammern herausragt, so dass Gewebematerial oder Folienmaterial der Kammern eingespart werden kann. An dem Verteilelement können Laschen zur Befestigung des Airbags innerhalb des Fahrzeuges vorgesehen sein. Die Kammern und der Hohlkörper bzw. das Verteilelement können aus unterschiedlichen Materialien hergestellt sein, beispielsweise einem entsprechenden Gewebe oder einer Folie. Die erfindungsgemäße Ausgestaltung ermöglicht ein gleichzeitiges Befüllen der separaten Kammern nach dem Auslösen des Gasgenerators, so dass sehr schnell eine Schutzwirkung für die Insassen erreicht werden kann. Die Ausströmöffnungen können randverstärkt ausgebildet sein, beispielsweise mit einem Saum oder einer zusätzlichen Materiallage. Die Verbindungsspuren sind bevorzugt gasdicht ausgebildet, insbesondere mit Silikon abgedichtet.

Ebenfalls kann nur der untere Abschnitt des Verteilelementes und der obere Abschnitt der Kammer oder der Kammern im Bereich der Ausströmöffnungen aufeinander aufliegen bzw. aufeinanderstoßen, so dass eine gemeinsame, nahezu ebene Kontaktfläche gebildet wird. Somit wird das Verteilelement nicht teilweise in den Kammern aufgenommen, sondern die nur durch die Ausströmöffnungen durchbrochene Wandungen des Verteilelementes und der Kammern werden aufeinandergenäht und zueinander fixiert, so dass eine sichere Zuordnung der Ausströmöffnungen zueinander erfolgt.

Der erfindungsgemäße Airbag kann sowohl als Seitenschutz- als auch als Frontschutzairbag eingesetzt werden.

Das erfindungsgemäße Verfahren sieht vor, zum Herstellen eines Airbags, insbesondere eines Airbags für den Kopf- und Schulterbereich, mit einem Verteilelement für Gas eines Gasgenerators und zumindest einer aufblasbaren mehrlagigen Kammer, die mit dem Gas des Gasgenerators befüllbar ist und in strömungstechnischer Verbindung mit Ausströmöffnung des Verteilelementes steht, das zumindest eine Aufnahmeeinrichtung für den Gasgenerator aufweist und an dem Airbag befestigt ist, das ein Verteilelementzuschnitt und ein Kammerzuschnitt außenseitig aufeinander gelegt und über die Ausströmöffnungen umgebenden Verbindungsspuren der Kammerzuschnitt an dem Verteilelementzuschnitt befestigt wird und anschließend der Verteilelementzuschnitt und der Kammerzuschnitt über jeweils eine Verschlussspur zu je einem Hohlkörper verschlossen werden. Dadurch ist es möglich, dass das Verteilelement aus einem oder mehreren Zuschnitten hergestellt sein kann, die nachträglich miteinander verbunden werden. Nachfolgend wird ein Ausführungsbeispiel der Erfindung anhand der Figuren näher erläutert. Es zeigen:
- Figur 1-: eine Draufsicht auf einen erfindungsgemäßen Airbag;
- Figur 2-: eine Schnittdarstellung gemäß Linie II - II in Figur 1;
- Figur 3 -: eine perspektivische Darstellung einer Variante;
- Figur 4 -: eine Schnittdarstellung der Variante gemäß Fig. 3; sowie
- Figur 5: Detaildarstellung der Erfindung.
- Figur 6: Detaildarstellung die nicht zur Erfindung gehöst

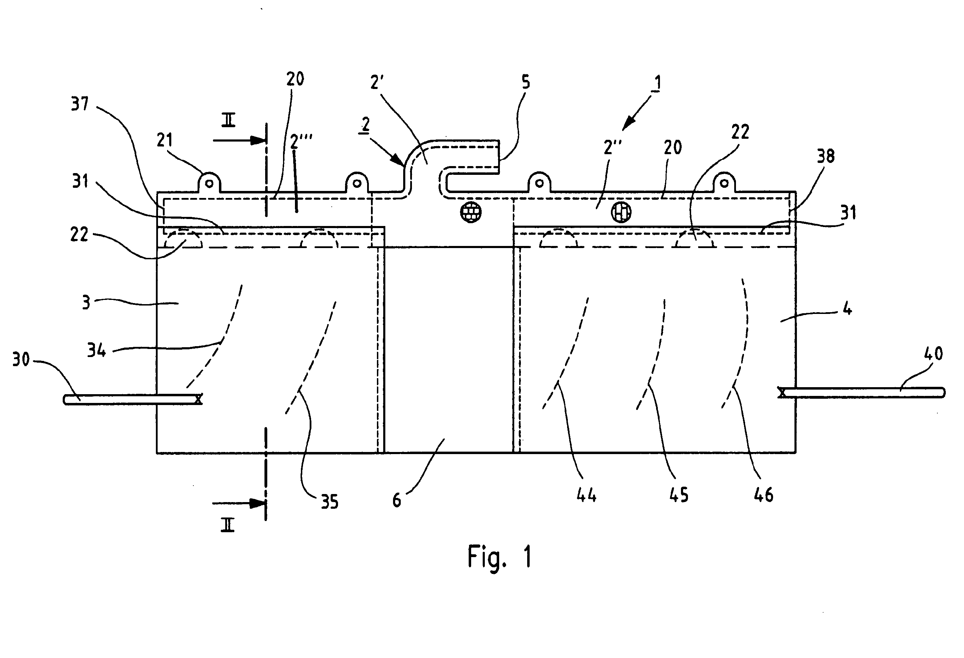

Figur 1 zeigt einen Airbag 1 mit einem Verteilelement 2, das aus drei Teilelementen 2', 2", 2"' aufgebaut ist. Die dargestellte Ausführungsform weist eine Aufnahmeeinrichtung 5 in Gestalt einer Einführöffnung für einen nicht dargestellten Gasgenerator, ungefähr in der Mitte des Verteilelementes 2, auf. An das mittlere Teilelement 2' sind zwei Seitenelemente 2", 2"' angenäht, die zusammen eine Verteillanze für das von dem Gasgenerator produzierte Gas bilden. Die beiden entgegengesetzten Enden der Verteillanze werden durch Nähte 37, 38 verschlossen. Im unteren Bereich der Teilelemente 2", 2"" sind Ausströmöffnungen 22 ausgebildet, durch die Gas in Kammern 3, 4 einströmen kann. In dem dargestellten Ausführungsbeispiel sind die Kammern 3, 4 separat in Gestalt von einstückig gewebten, zweilagigen Hohlkörpern ausgebildet, die über Verbindungsnähte 31 an dem jeweiligen Teilelement 2", 2"' angenäht sind. Statt der dargestellten Nähte können alternative Befestigungsverfahren angewendet werden, beispielsweise das Schweißen oder Kleben. Ebenfalls können sowohl das Verteilelement als auch die Kammern statt aus einem Gewebe aus Folienmaterial oder dergleichen hergestellt sein.

An dem oberen, den Kammern 3, 4 gegenüberliegenden Ende des Verteilelementes 2 sind Anbindungspunkte 21 vorgesehen, mit denen der Airbag 1 an einem Dachrahmen oder einem sonstigen Karosserieteil eines Fahrzeuges befestigt werden kann. Für den Fall eines Seitenairbags, der sich vor die Fenster eines Fahrzeuges legt, sind an den Kammern 3, 4 Spannbänder 30, 40 ausgebildet, um eine Anbindung an Karosserieteile zu ermöglichen. Vorgesehen ist, dass die vordere Kammer 4 über das Spannband 40 an der A-Säule und die hintere Kammer 3 über das Spannband 30 an der C-Säule befestigt ist. Der nicht dargestellte Gasgenerator und damit auch die Aufnahmeeinrichtung 5 für den Gasgenerator sind im Bereich der B-Säule angeordnet. Sofern der Gasgenerator nicht an der B-Säule eines Fahrzeuges angeordnet ist, ist die Aufnahmeeinrichtung 5 an einem Endbereich des Verteilelementes 2 ausgebildet.

In dem dargestellten Ausführungsbeispiel sind die Kammern 3, 4 separat ausgebildet und durch ein Verbindungsgewebe 6, das einlagig und damit leicht und preiswert ist, verbunden. Durch das Verbindungsgewebe 6, das ebenfalls im Bereich der B-Säule und damit in einem nicht durch Kammern 3, 4 abzudeckenden Bereich angeordnet ist, ist es möglich, eine durchgängige Fläche durch die Kammern 3, 4 und das Verbindungsgewebe 6 abzudecken, so dass über die Spannbänder 30, 40 wirkungsvoll ein Ausklappen der Kammern 3, 4 bei einer zerstörten Seitenscheibe oder eine Eindringen von Gegenständen in Richtung auf den Insassen verhindert werden kann.

Innerhalb der Kammern 3, 4 sind Nähte bzw. Säume 34, 35, 44, 45, 46 ausgebildet, die die Kammern 3, 4 in einzelne, aufblasbare Bereiche unterteilen. Es ist möglich, dass die Nähte oder Säume 34, 35, 44, 45, 46 durchgängig ausgebildet sind, so dass voneinander abgetrennte Kompartements in den Kammern 3, 4 ausgebildet werden. Die Ausströmöffnungen 22 sind dabei so angeordnet, dass jede Kammer 3, 4 und gegebenenfalls jedes Kompartement schnellstmöglich befüllt werden kann.

In der Figur 1 ist angedeutet, dass die Gewebestruktur des mittleren Teilelementes 2' mit der Aufnahmeeinrichtung 5 für den Gasgenerator von der Gewebestruktur der seitlichen Teilelemente 2", 2"' verschieden ist. Dies ist durch den unterschiedlichen Winkelverlauf der Garne angedeutet, während in dem mittleren Teilelement 2' ein 45°-Verlauf der Garne gezeigt ist, ist ein rechtwinkliger Garnverlauf in den seitlichen Teilelementen 2", 2"' vorgesehen. Das mittlere Teilelement 2' und die seitlichen Teilelemente 2", 2"' können auch aus Geweben unterschiedlicher Garnstärke hergestellt sein.

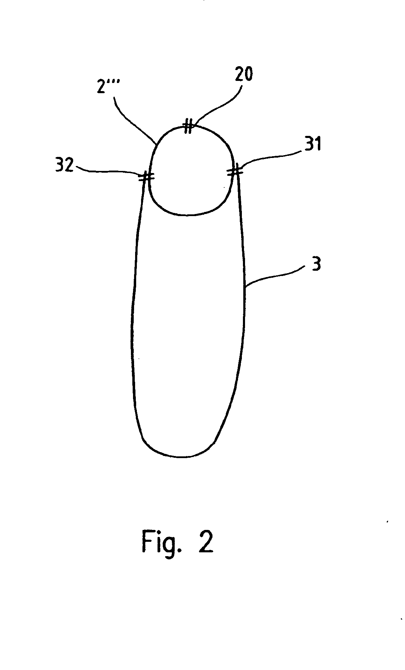

In der Figur 2 ist zu erkennen, dass die Kammer 3 aus einem einstückigen Gewebe ausgebildet ist, das an dem seitlichen Teilelement 2"' über Verbindungsnähte 31, 32 angenäht ist. Das Gewebe des seitlichen Teilelementes 2"' ist aus einem Grundgewebe ausgeschnitten und über eine Verschlussnaht 20 zu einem Hohlkörper verschlossen. Die Verbindungsnähte 31, 32 sind von dem Verschlusselement 20 beabstandet ausgeführt, so dass ein Teil des Verteilelementes 2 oberhalb der Kammern 3, 4 angeordnet ist. Lediglich der untere Abschnitt des Verteilelementes 2 mit den Ausströmöffnungen 22 ist von dem Gewebe der Kammern 3, 4 überdeckt, so dass sich zwei im Wesentlichen geschlossene Hohlkörper durch die Kammern 3, 4 sowie die Seitenabschnitte 2", 2"' des Verteilelementes 2 ausbilden. Statt einer einstückigen Ausbildung des seitlichen Teilelementes 2"' ist es möglich, dieses aus zwei Zuschnitten mit zwei Verschlussnähten zu bilden.

Eine Möglichkeit zur Herstellung eines erfindungsgemäßen Airbags 1 sieht vor, dass zunächst die Verbindungsnähte 31, 32 ausgeführt werden. Anschließend wird eine erste Verschlussnaht zum Verbinden zweier Lagen des Verteilelementes 2 bzw. des seitlichen Teilelementes 2"' gebildet. Anschließend wird gegebenenfalls die zweite Verschlussnaht des Verteilelementes 2 bzw. des seitlichen Teilelementes 2"' gebildet. Sofern die Kammer 3 ebenfalls nach dem cut-and-sewn-Verfahren hergestellt wurde, wird die Kammer 3 durch eine Umfangsnaht unter Bildung eines Hohlkörpers geschlossen. Sollte die Kammer 3 einstückig gewebt ausgebildet sein, entfällt der letzte Arbeitsschritt.

Durch den erfindungsgemäßen Airbag ist es möglich, dass die Kammern 3, 4 bei Verwendung eines einstückig gewebten Gewebes eine verbesserte Standzeit aufgrund verbesserter Dichtigkeit aufweisen. Aufgrund der geringeren Druckbelastung in den Kammern 3,4 im Verhältnis zu dem mittleren Teilelement 2' ist es möglich, unbeschichtetes Material für die Kammern 3, 4 zu verwenden, so dass eine leichtere und kostengünstigere Realisierung des Airbags 1 möglich ist. Das mittlere Teilelement 2' des Verteilelementes 2 kann mit einer Verstärkung versehen sein bzw. aus einem verstärkten Gewebe hergestellt sein, um den hohen Druck aus dem Gasgenerator sowie den hohen Temperaturen beim Entfalten des Airbags 1 standhalten zu können. Die seitlichen Teilelemente 2", 2"' sind an dem mittleren Teilelement 2' angenäht und vorzugsweise an den dem mittleren Teilelement 2' abgewandten Enden verschlossen. Die seitlichen Teilelemente 2", 2"' sammeln das erzeugte Gas und verteilen es auf die jeweiligen Kammern 3, 4. Durch die Größe der Ausströmöffnungen 22 sowie der Abmessungen der seitlichen Teilelemente 2", 2"' kann der Gasstrom gesteuert und damit die Belastung auf die Nähte in den Kammern 3, 4 bzw. in den darin ausgebildeten Kompartements reduziert werden. Die Kammern 3, 4 selbst können auf die jeweils gewünschte Entfaltungscharakteristik abgestimmt werden und können auch zu einem einstückigen Materialstück gewoben sein Die vorliegende Erfindung ermöglicht eine Kombination von beschichteten und unbeschichteten Geweben, wobei eine Verstärkung nur in denjenigen Bereichen aufgebracht werden muss, in denen sie benötigt wird. Elastische Nähte können in den Bereichen hoher Belastung vorgesehen sein, während gewebte Säume oder Nähte für Bereiche mit geringeren Belastungen und verbessertem Standverhalten vorgesehen sein können. Der erfindungsgemäße Airbag 1 kann auf den jeweiligen Einsatzzweck abgestimmt werden, wodurch leichtere Textilien und dünnere Garne einsetzbar sind, was zu einer Reduzierung des Gewichtes und der Packgröße führt. Solch ein Airbag kann auch als Seitenairbag ausgebildet sein.

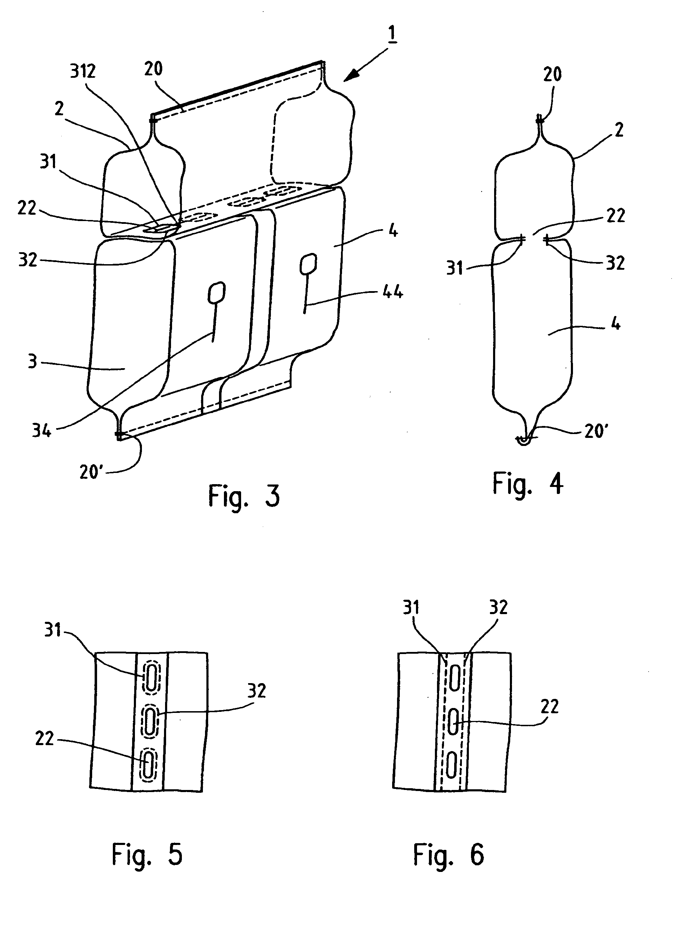

In der Figur 3 ist eine alternative Ausgestaltungsform der Erfindung in perspektivischer Darstellung gezeigt. Das Verteilelement 2 ist dabei ohne Aufnahmeeinrichtung für den Gasgenerator dargestellt. Der Gasgenerator kann auch endseitig an dem Verteilelement 2 befestigt sein. Anders als bei der Figur 1 ist gemäß der Figur 3 der Airbag mit zwei sich nach unten erstreckenden, separaten Kammern 3, 4 ausgebildet, die an der Unterseite des Verteilelementes 2 über Verbindungsspuren 31, 32 in Gestalt von Nähten, Schweißnähten oder Klebenähten im Bereich der Ausströmöffnungen 22 verbunden. In dem vorliegenden Ausführungsbeispiel sind die Verbindungsspuren 31, 32 geschlossen um die Ausströmöffnungen 22 herum ausgebildet und über eine Verbindung 312 gekoppelt, so dass eine geschlossene Nahtführung in Gestalt einer "8" vorliegt. Bei weiteren Ausströmöffnungen 22 können entsprechende, sich kreuzende Nähte nacheinander angeordnet sein, so dass insgesamt eine geschlossene Kette von umhüllenden Verbindungsspuren 31, 32 um die Ausströmöffnungen 22 ausgebildet wird. Alternativ zu einer sich kreuzenden Nahtführung im Bereich der Verbindungen 312 können dort die Verbindungsspuren 31, 32 parallel zueinander oder übereinander verlaufen, so dass kein oder kein nennenswerter Verbindungsraum zwischen den Verbindungsspuren 31, 32 im Bereich der Verbindung 312 vorliegt, so dass in diesem Bereich eine einzelne Verbindungsspur vorliegt..

Zur Herstellung des Airbags 1 werden die entsprechenden Zuschnitte der Kammern 3, 4 und des Verbindungselementes 2 außenseitig aufeinander gelegt und im Bereich der Ausströmöffnungen 22 bzw. Durchströmöffnungen miteinander durch die Verbindungsspuren 31, 32 verbunden. Dann werden die Zuschnitte gegensinnig umgeschlagen und über Verschlussspuren 20, 20' oder Verschlussnähte verschlossen. Dadurch werden die entsprechenden Hohlkörper gebildet, die durch das ausströmende Gas des Gasgenerators befüllt werden.

In der Figur 4 ist eine Schnittdarstellung durch den Airbag gemäß Figur 1 im Bereich der Ausströmöffnung 22 gezeigt. Die Verbindungsspuren 31, 32 umschließen dabei die Ausströmöffnung 22 und bewirken eine exakte Fixierung der Ausströmöffnungen 22 innerhalb des Verteilelementes 2 zu der Ausströmöffnung 22 in der Kammer 4. Die Verschlussnaht 20, 20' kann entweder, wie beim Verteilelement 2 gezeigt, durch einfaches Aufeinanderlegen und Vernähen, Verschweißen oder Verkleben erzeugt werden oder durch ein Umschlagen und anschließendes Vernähen, Verkleben oder Verschweißen, wie es bei der Verschlussnaht 20' der Kammer 4 gezeigt ist. Die Anordnung der jeweiligen Verschlussart ist dabei beliebig.

Die Ausströmöffnungen 22 an den jeweiligen Zuschnitten können verstärkt sein, beispielsweise durch Materialaufdopplungen oder durch eine Umsäumung.

In der Figur 5 ist in Detaildarstellung eine separate, die Ausströmöffnung 22 vollständig umgebende Nahtausführung der Verbindungsspuren 31, 32 gezeigt. Eine Verbindung 312 liegt dabei nicht vor. Durch die Nahtführung der Verbindungsspuren 31, 32 werden einzelne Kontaktflächen im Bereich der Ausströmöffnungen 22 erzeugt; die Gewebe oder Materialien des Verteilelementes 2 und der Kammern 3, 4 stoßen hier aufeinander und liegen aneinander an, ansonsten sind die Kammer 23, 4 und das Verteilelement 2 separat ausgebildet, anders als in dem Ausführungsbeispiel der Figur 2, bei dem das Verteilelement 2 einen Teil der Kammer 3 mit ausbildet.

In der Figur 6 sind die Verbindungsspuren als parallele, die Ausströmöffnungen 22 zwischen sich aufnehmende, im Wesentliche geradlinige Verbindungsspuren 31, 32 ausgebildet. Die Ausströmöffnungen 22 können als Löcher oder Schlitze ausgestaltet sein. Sämtliche Verbindungsspuren, soweit sie genäht sind, sind bevorzugt gasdicht ausgeführt, beispielsweise indem Silikon auf die Naht aufgebracht wird.

Auch bei diesem Ausführungsbeispiel können sämtliche Verbindungen zwischen den einzelnen Lagen oder Schichten genäht, geschweißt oder verklebt werden, bei einem Vernähen können die Nähte zusätzlich abgedichtet sein, beispielsweise mittels einer Silikonschicht oder indem durch eine Silikonspur hindurchgenäht wird. Neben dem Einsatz als Seitenschutzairbag gegen einen Seitenaufprall oder Überschlag kann der erfindungsgemäße Airbag auch als Sicherheitseinrichtung gegen einen Frontalaufprall oder einen Heckaufprall als Frontschutzairbag eingesetzt werden.

## Patentansprüche

1. Airbag, insbesondere Airbag für den Kopf- und Schulterbereich, mit einem Verteilelement (2, 2', 2", 2"') für Gas eines Gasgenerators und mit zumindest einer aufblasbaren Kammer (3, 4), die zumindest zwei Lagen aufweisend in dem Airbag ausgebildet und mit dem Gas des Gasgenerators befüllbar ist und in strömungstechnischer Verbindung mit Ausströmöffnungen (22) des Verteilelementes (2; 2', 2", 2"') steht, das zumindest eine Aufnahmeeinrichtung (5) für den Gasgenerator aufweist und an dem Airbag befestigt ist, wobei das Verteilelement (2; 2', 2", 2"') aus einem Grundmaterial ausgeschnitten und zu einem Hohlkörper verbunden ist **dadurch gekennzeichnet, dass** die Lagen der Kammern (3, 4) über zumindest zwei, die Ausströmöffnungen (22) zumindest teilweise umgebende Verbindungsspuren (31, 32) an dem Verteilelement (2; 2', 2", 2"') befestigt sind, wobei die Verbindungsspuren (31, 32) die Ausströmöffnungen (22) vollständig umgeben.

2. Airbag nach Anspruch 1, **dadurch gekennzeichnet, dass** die Kammern (3, 4) formschlüssig, kraftschlüssig oder stoffschlüssig an dem Verteilelement (2; 2', 2", 2"') befestigt, insbesondere angenäht, angeklebt oder verschweißt sind.

3. Airbag nach Anspruch 1 oder 2, **dadurch gekennzeichnet, dass** die Verbindungsspuren (31, 32) die Lagen der Kammern (3, 4) separat mit jeweils einer Lage des Verteilelementes (2; 2', 2", 2"') verbinden.

4. Airbag nach einem der voranstehenden Ansprüche, **dadurch gekennzeichnet, dass** die Kammern (3, 4) einstückig gewoben ausgebildet sind.

5. Airbag nach einem der voranstehenden Ansprüche, **dadurch gekennzeichnet, dass** eine Verschlussspur (20) die zwei Lagen des Verteilelementes (2; 2', 2", 2"') verbindet und die Verbindungsspuren (31, 32) von der Verschlussspur (20) beabstandet sind.

6. Airbag nach einem der voranstehenden Ansprüche, **dadurch gekennzeichnet, dass** mehrere, separate Kammern (3, 4) an dem Verteilelement (2; 2', 2", 2"') befestigt sind.

7. Airbag nach Anspruch 6, **dadurch gekennzeichnet, dass** die Kammern (3, 4) separat voneinander an dem Verteilelement (2; 2', 2", 2"') befestigt sind.

8. Airbag nach Anspruch 6 oder 7, **dadurch gekennzeichnet, dass** zwischen den Kammern (3, 4) ein Verbindungsgewebe (6) angeordnet ist,

9. Airbag nach einem der voranstehenden Ansprüche, **dadurch gekennzeichnet, dass** das Verteilelement (2; 2', 2", 2"') und die Kammern (3, 4) aus Materialien mit unterschiedlichen physikalischen Eigenschaften hergestellt sind.

10. Airbag nach einem der voranstehenden Ansprüche, **dadurch gekennzeichnet, dass** das Verteilelement (2; 2', 2", 2"') mehrteilig ausgebildet ist.

11. Airbag nach Anspruch 9, **dadurch gekennzeichnet, dass** die Teile des Verteileiementes (2; 2', 2", 2"') aus Materialien mit unterschiedlichen physikalischen Eigenschaften hergestellt sind.

12. Airbag nach einem der voranstehenden Ansprüche, **dadurch gekennzeichnet, dass** die Verbindungsspuren (31, 32) sich über die gesamte Länge der Kammer (3, 4) erstrecken.

13. Airbag nach einem der voranstehenden Ansprüche, **dadurch gekennzeichnet, dass** das Verteilelement (2; 2', 2", 2"') nur mit einem unteren, die Ausströmöffnungen (22) aufweisenden Abschnitt von der Kammer (3; 4) oder den Kammern (3, 4) überdeckt ist und ein oberer Bereich des Verteilelementes (2; 2', 2", 2"') über die Kammern (3, 4) oder aus den Kammern (3, 4) herausragt.

14. Airbag nach einem der Ansprüche 1 bis 12, **dadurch gekennzeichnet, dass** die Kammern (3, 4) an dem Verteilelement (2; 2', 2", 2"') im Bereich der Ausströmöffnungen (22) flächig aneinander anliegen und eine Kontaktfläche ausbilden.

15. Verfahren zum Herstellen eines Airbags für den Kopf- und Schulterbereich, mit einem Verteilelement für Gas eines Gasgenerators und mit zumindest einer aufblasbaren, mehrlagigen Kammer, die mit dem Gas des Gasgenerators befüllbar ist und in strömungstechnischer Verbindung mit Ausströmöffnungen des Verteilelementes steht, das zumindest eine Aufnahmeeinrichtung für den Gasgenerator aufweist und an dem Airbag befestigt ist, **dadurch gekennzeichnet, dass** ein Verteilelementzuschnitt und ein Kammerzuschnitt außenseitig aufeinandergelegt und über die Ausströmöffnungen (22) umgebenden Verbindungsspuren (31, 32) der Kammerzuschnitt an dem Verteilelementzuschnitt befestigt wird und anschließend der Verteilelementzuschnitt und der Kammerzuschnitt über jeweils eine Verschlussspur (20) zu je einem Hohlkörper verschlossen werden.

## Claims

1. Airbag, in particular airbag for the head and shoulder region, with a distributing element (2; 2', 2", 2"') for gas of a gas generator and with at least one inflatable chamber (3, 4) which is formed, having at least two layers, in the airbag and can be filled with the gas of the gas generator and is connected in terms of flow to discharge openings (22) of the distributing element (2; 2', 2", 2"') which has at least one receiving device (5) for the gas generator and is fastened to the airbag, the distributing element (2; 2', 2", 2"') being cut out of a base material and being connected to a hollow body, **characterized in that** the layers of the chambers (3, 4) are fastened to the distributing element (2; 2', 2", 2"') via at least two connecting tracks (31, 32) at least partially surrounding the discharge openings (22), the connecting tracks (31, 32) completely surrounding the discharge openings (22).

2. Airbag according to Claim 1, **characterized in that** the chambers (3, 4) are fastened to the distributing element (2; 2', 2", 2"') in a form fitting frictional manner or with a cohesive material joint, in particular are sewn, adhesively bonded or welded to it.

3. Airbag according to Claim 1 or 2, **characterized in that** the connecting tracks (31, 32) connect the layers of the chambers (3, 4) separately to a respective layer of the distributing element (2, 2', 2", 2"').

4. Airbag according to one of the preceding claims, **characterized in that** the chambers (3, 4) are of single-piece woven design.

5. Airbag according to one of the preceding claims, **characterized in that** a closure track (20) connects the two layers of the distributing element (2; 2', 2", 2"') and the connecting tracks (31, 32) are spaced apart from the closure track (20).

6. Airbag according to one of the preceding claims, **characterized in that** a plurality of separate chambers (3, 4) are fastened to the distributing element (2; 2', 2", 2"').

7. Airbag according to Claim 6, **characterized in that** the chambers (3, 4) are fastened separately from each other to the distributing element (2; 2', 2" 2"').

8. Airbag according to Claim 6 or 7, **characterized in that** a connecting fabric (6) is arranged between the chambers (3, 4).

9. Airbag according to one of the preceding claims, **characterized in that** the distributing element (2; 2', 2", 2"') and the chambers (3, 4) are produced from materials with different physical properties.

10. Airbag according to one of the preceding claims, **characterized in that** the distributing element (2; 2', 2", 2"') is of multi-part design.

11. Airbag according to Claim 9, **characterized in that** the parts of the distributing element (2; 2', 2", 2"') are produced from materials with different physical properties.

12. Airbag according to one of the preceding claims, **characterized in that** the connecting tracks (31, 32) extend over the entire length of the chambers (3, 4).

13. Airbag according to one of the preceding claims, **characterized in that** the distributing element (2; 2', 2", 2"') is covered only by a lower section of the chamber (3; 4) or the chambers (3, 4), which section has the discharge openings (22), and an upper region of the distributing element (2; 2', 2", 2"') protrudes over the chambers (3, 4) or out of the chambers (3, 4).

14. Airbag according to one of Claims 1 to 12, **characterized in that** the chambers (3, 4) on the distributing element (2; 2', 2", 2"') bear flat against each other in the region of the discharge openings (22) and form a contact surface.

15. Method for producing an airbag for the head and shoulder region, with a distributing element for gas of a gas generator and with at least one inflatable, multi-layered chamber which can be filled with the gas of the gas generator and is connected in terms of flow to discharge openings of the distributing element which has at least one receiving device for the gas generator and is fastened to the airbag, **characterized in that** a distributing element blank and a chamber blank are placed on each other by their outsides and the chamber blank is fastened to the distributing element blank via connecting tracks (31, 32) surrounding the discharge openings (22), and subsequently the distributing element blank and the chamber blank are closed via one closure track (20) in each case to form a hollow body.

## Revendications

1. Coussin gonflable, en particulier coussin gonflable pour la région de la tête et des épaules, comprenant un élément de distribution (2 ; 2', 2", 2"') pour le gaz d'un générateur de gaz et comprenant au moins un compartiment gonflable (3, 4) qui est formé dans le coussin gonflable en présentant au moins deux couches et qui est remplissable avec le gaz du générateur de gaz et se trouve en liaison par technique de circulation de fluides avec des ouvertures de départ (22) de l'élément de distribution (2 ; 2', 2", 2"'), lequel présente au moins un dispositif d'admission (5) pour le générateur de gaz et est fixé au coussin gonflable, l'élément de distribution (2 ; 2', 2", 2"') étant découpé dans un matériau de base et relié en un corps creux, **caractérisé en ce que** les couches des compartiments (3, 4) sont fixées à l'élément de distribution (2 ; 2', 2", 2"') par l'intermédiaire d'au moins deux pistes de liaison (31, 32) entourant au moins partiellement les ouvertures de départ (22), les pistes de liaison (31, 32) entourant entièrement les ouvertures de départ (22).

2. Coussin gonflable selon la revendication 1, **caractérisé en ce que** les compartiments (3, 4) sont fixés à l'élément de distribution (2 ; 2', 2", 2"') par liaison par formes conjuguées, liaison par adhérence ou liaison de matière, en particulier cousus, collés ou soudés.

3. Coussin gonflable selon la revendication 1 ou 2, **caractérisé en ce que** les pistes de liaison (31, 32) relient les couches des compartiments (3, 4) séparément avec respectivement une couche de l'élément de distribution (2 ; 2', 2", 2"').

4. Coussin gonflable selon l'une des revendications précédentes, **caractérisé en ce que** les compartiments (3, 4) sont formés tissés d'un seul tenant.

5. Coussin gonflable selon l'une des revendications précédentes, **caractérisé en ce qu'**une piste de fermeture (20) relie les deux couches de l'élément de distribution (2 ; 2', 2", 2"'), et les pistes de liaison (31, 32) sont espacées de la piste de fermeture (20).

6. Coussin gonflable selon l'une des revendications précédentes, **caractérisé en ce que** plusieurs compartiments (3, 4) séparés sont fixés à l'élément de distribution (2 ; 2', 2", 2"').

7. Coussin gonflable selon la revendication 6, **caractérisé en ce que** les compartiments (3, 4) sont fixés à l'élément de distribution (2 ; 2', 2", 2"') séparément les uns des autres.

8. Coussin gonflable selon la revendication 6 ou 7, **caractérisé en ce qu'**un tissu de liaison (6) est agencé entre les compartiments (3, 4).

9. Coussin gonflable selon l'une des revendications précédentes, **caractérisé en ce que** l'élément de distribution (2 ; 2', 2", 2"') et les compartiments (3, 4) sont fabriqués en matériaux ayant des propriétés physiques différentes.

10. Coussin gonflable selon l'une des revendications précédentes, **caractérisé en ce que** l'élément de distribution (2 ; 2', 2", 2"') est formé en plusieurs parties.

11. Coussin gonflable selon la revendication 9, **caractérisé en ce que** les parties de l'élément de distribution (2 ; 2', 2", 2"') sont fabriquées à base de matériaux ayant des propriétés physiques différentes.

12. Coussin gonflable selon l'une des revendications précédentes, **caractérisé en ce que** les pistes de liaison (31, 32) s'étendent sur toute la longueur du compartiment (3, 4).

13. Coussin gonflable selon l'une des revendications précédentes, **caractérisé en ce que** l'élément de distribution (2 ; 2', 2", 2"') n'est recouvert que par une partie inférieure du compartiment (3 ; 4) ou des compartiments (3, 4), cette partie inférieure présentant les ouvertures de départ (22), et une région supérieure de l'élément de distribution (2 ; 2', 2", 2"') fait saillie au-delà des compartiments (3, 4) ou hors des compartiments (3, 4).

14. Coussin gonflable selon l'une des revendications 1 à 12, **caractérisé en ce que** les compartiments (3, 4) sont adjacents les uns aux autres selon une surface, dans la région des ouvertures de départ (22), et forment une surface de contact.

15. Procédé de fabrication d'un coussin gonflable pour la région de la tête et des épaules, comprenant un élément de distribution pour le gaz d'un générateur de gaz et comprenant au moins un compartiment en plusieurs couches gonflable qui est remplissable avec le gaz du générateur de gaz et se trouve en liaison par technique de circulation de fluides avec des ouvertures de départ de l'élément de distribution, lequel présente au moins un dispositif d'admission pour le générateur de gaz et est fixé au coussin gonflable, **caractérisé en ce que** l'on dépose l'une sur l'autre côté extérieur une découpe d'élément de distribution et une découpe de compartiment, et on fixe la découpe de compartiment à la découpe d'élément de distribution par l'intermédiaire de pistes de liaison (31, 32) entourant les ouvertures de départ (22), et on ferme ensuite à chaque fois en un corps creux la découpe d'élément de distribution et la découpe de compartiment par l'intermédiaire d'une piste de fermeture (20) respective.
